# EUROPEAN PATENT APPLICATION

(11) **EP 4 734 207 A1**
(43) Date of publication of application: **29.04.2026**
(21) Application number: 23941955.9
(22) Date of filing: 21.06.2023
(51) Int. Cl.: H01M 10/0525, H01M 10/058

(54) **DOWNWARD-PRESSING MECHANISM, PRESSURE APPLICATION APPARATUS AND BATTERY PRODUCTION DEVICE**

(71) Applicant: Contemporary Amperex Technology Co., Limited, Ningde, Fujian 352100 (CN)
(72) Inventor: BAI, Guoxi, Ningde, Fujian 352100 (CN)
(74) Representative: Ran, Handong
(86) International application number: PCT/CN2023/101882
(87) International publication number: WO 2024/259669

(57) **Abstract**

Disclosed in the present application are a downward-pressing mechanism, a pressure application apparatus and a battery production device. The downward-pressing mechanism comprises a variable-distance unit and a plurality of downward-pressing members, wherein the variable-distance unit comprises a substrate and a plurality of variable-distance members sequentially arranged on the substrate in a first direction, and at least one variable-distance member can move in the first direction; and each downward-pressing member is connected to a corresponding variable-distance member, and the downward-pressing member is used for pressing a product.

## Description

### TECHNICAL FIELD

This application relates to the field of battery manufacturing technologies, and in particular, to a down-pressing mechanism, a pressurizing apparatus, and a battery production device.

### BACKGROUND

Energy conservation and emission reduction are key to the sustainable development of the transportation vehicle industry, and electric vehicles have become an important component of the sustainable development of the transportation vehicle industry due to their advantages of energy conservation and environmental protection. For electric vehicles, battery technology is an important factor in connection with their development.

In the battery manufacturing process, battery cells need to undergo static heating, during which the batteries must remain stationary without shifting or moving. Currently, a down-pressing mechanism is typically configured to press the tops of the battery cells. The down-pressing mechanism includes multiple pressing members capable of pressing a row of battery cells. However, traditional down-pressing mechanisms are typically only applicable to battery cells of one specification, resulting in poor compatibility.

### SUMMARY

In view of the above issues, this application provides a down-pressing mechanism, a pressurizing apparatus, and a battery production device, which can adjust spacings between down-pressing members in the down-pressing mechanism, thereby improving the compatibility of the down-pressing mechanism.

An embodiment of the first aspect of this application provides a down-pressing mechanism including a pitch adjustment unit and multiple down-pressing members. The pitch adjustment unit includes a base plate and multiple pitch adjustment members arranged sequentially on the base plate along a first direction, where at least one pitch adjustment member is capable of moving along the first direction, each down-pressing member is connected to a corresponding pitch adjustment member, and the down-pressing members are configured to press a product.

The down-pressing mechanism provided by this embodiment of this application includes the pitch adjustment assembly and the multiple down-pressing members. The pitch adjustment assembly includes the base plate and the multiple pitch adjustment members arranged sequentially on the base plate along the first direction. Since at least one pitch adjustment member can move along the first direction, the down-pressing member connected to the pitch adjustment member can also move along the first direction to adjust spacings between adjacent down-pressing members. Therefore, the down-pressing mechanism can adjust the spacings between the down-pressing members to adapt to products of different specifications, enhancing the compatibility of the down-pressing mechanism and avoiding the issues of low efficiency and increased costs caused by the need to replace the down-pressing mechanism during production line changeovers.

In some embodiments, the pitch adjustment unit further includes a pitch adjustment drive assembly disposed on the base plate, at least one pitch adjustment member is slidably connected to the base plate, and the pitch adjustment drive assembly is configured to drive at least one pitch adjustment member to move along the first direction.

With the above technical solution used, at least one pitch adjustment member can slide along the base plate under the drive of the pitch adjustment drive assembly, achieving a high degree of automation.

In some embodiments, the pitch adjustment drive assembly includes a screw rod disposed on the base plate and extending along the first direction and a rotation drive member connected to the screw rod; and an outer peripheral surface of the screw rod is provided with at least one threaded portion, at least one pitch adjustment member is drivingly connected to the threaded portion, and the rotation drive member is configured to drive the screw rod to rotate so as to drive the pitch adjustment member to move along the first direction.

With the above technical solution used, the pitch adjustment drive assembly drives the pitch adjustment member to slide via the screw rod, featuring a simple structure and convenience in use.

In some embodiments, the screw rod is provided with multiple threaded portions, where the multiple pitch adjustment members are drivingly connected to one corresponding threaded portion, and the screw rod is capable of simultaneously driving the multiple pitch adjustment members to slide along the first direction.

With the above technical solution used, the pitch adjustment drive assembly is capable of simultaneously driving the multiple pitch adjustment members to slide so as to synchronously adjust distances between the multiple pitch adjustment members, featuring high adjustment efficiency, a simple structure, and convenience in driving.

In some embodiments, the screw rod includes a first segment and a second segment respectively provided on opposite sides of a reference plane, where the reference plane is a cross section of the screw rod; and the multiple threaded portions include at least one first threaded portion disposed on the first segment and at least one second threaded portion disposed on the second segment, where the first threaded portion and the second threaded portion have opposite thread directions.

With the above technical solution used, a large number of pitch adjustment members can be disposed on the screw rod; in addition, the time required for pitch adjustment is relatively short, and movement distances of the down-pressing members are relatively balanced.

In some embodiments, multiple first threaded portions are provided, and leads of the multiple first threaded portions increase along a direction away from the second segment; and/or multiple second threaded portions are provided, and leads of the multiple second threaded portions increase along a direction away from the first segment in an arithmetic sequence.

With the above technical solution used, the multiple pitch adjustment members connected to the first segment can all move along the first direction, and there are equal spacings between the multiple pitch adjustment members.

In some embodiments, the leads of the multiple first threaded portions increase in an arithmetic sequence along the direction away from the second segment; and/or the leads of the multiple second threaded portions increase in an arithmetic sequence along the direction away from the first segment.

With the above technical solution used, after pitch adjustment, there are still equal spacings between the multiple pitch adjustment members, and the multiple down-pressing members can respectively press multiple products of a same specification.

In some embodiments, the first threaded portion and the second threaded portion are symmetrically arranged with respect to the reference plane.

With the above technical solution used, a large number of threaded portions and pitch adjustment members can be provided on the screw rod, and the rotation of the screw rod can drive the pitch adjustment members on both sides to move simultaneously so as to quickly adjust spacings between the pitch adjustment members and the down-pressing members.

In some embodiments, one pitch adjustment member is located between the first threaded portion and the second threaded portion and is mounted on the screw rod via a bearing, and the remaining pitch adjustment members are slidably connected to the screw rod respectively.

With the above technical solution used, one pitch adjustment member serves as a central reference member and does not need to move along the first direction. The arrangement of the central reference member can effectively utilize the space on the screw rod, making the structure of the pitch adjustment unit compact and allowing for faster pitch adjustment of the entire pitch adjustment unit.

In some embodiments, thread directions of the multiple threaded portions are the same; and along an axial direction of the screw rod, leads of the multiple threaded portions increase in an arithmetic sequence.

With the above technical solution used, the pitch adjustment unit can also adjust the spacings between the down-pressing members, with relatively high pitch adjustment precision.

In some embodiments, the threaded portion is a helical groove extending in a helical pattern around an axial direction of the screw rod, one side of the pitch adjustment member is inserted into a corresponding helical groove, and the other side of the pitch adjustment member is connected to the down-pressing member.

With the above technical solution used, the pitch adjustment member can slide along the base plate with the rotation of the screw rod. The pitch adjustment member has a stable movement process, is less likely to shake, and has relatively high movement precision.

In some embodiments, the down-pressing mechanism further includes a mounting seat and a down-pressing drive assembly, where the base plate is slidably connected to the mounting seat; the down-pressing drive assembly is disposed on the mounting seat; and the down-pressing drive assembly is configured to drive the pitch adjustment unit to slide on the mounting seat, so that the down-pressing members press against the product.

With the above technical solution used, the down-pressing drive assembly can drive the pitch adjustment unit and the multiple down-pressing members to move up and down as a whole, achieving the down-pressing process on the product.

In some embodiments, the down-pressing drive assembly includes a down-pressing drive member and a connecting member connected to the down-pressing drive member, where the down-pressing drive member is disposed on a side of the mounting seat facing away from the down-pressing member and the pitch adjustment unit, and the connecting member passes through the mounting seat and is connected to the base plate.

With the above technical solution used, the down-pressing drive member can drive the base plate to descend without obstructing a down-pressing path of the down-pressing member.

In some embodiments, the down-pressing member includes a mounting member fixedly connected to the pitch adjustment member and a press-holding member connected to the mounting member.

With the above technical solution used, the shape of the press-holding member can be flexibly designed according to a product to be pressed.

In some embodiments, the mounting member is provided with a mounting hole, where the press-holding member is movably inserted into the mounting hole; an elastic member is sleeved on the press-holding member; and both ends of the elastic member respectively press against the mounting member and the press-holding member.

With the above technical solution used, the elastic member can provide a certain buffering effect for a down-pressing action of the press-holding member, ensuring that the press-holding member abuts against the product while preventing the press-holding member from causing damage to the product due to excessive pressure.

An embodiment of a second aspect of this application provides a pressurizing apparatus including the down-pressing mechanism according to the first aspect.

The pressurizing apparatus provided by this application is applicable to battery cells of various specifications, eliminating the need to disassemble and replace the down-pressing mechanism during changeover of the battery cells, allowing for a simple operation, improving the production efficiency of the pressurizing process, and reducing production costs.

In some embodiments, the pressurizing apparatus further includes a bottom plate, where the down-pressing mechanism is slidably connected to the bottom plate along a second direction, and the second direction is perpendicular to the first direction.

With the above technical solution used, the down-pressing mechanism can slide along the second direction, helping the down-pressing mechanism to approach or move away from the battery cells, and achieving a high degree of automation.

In some embodiments, the pressurizing apparatus further includes a side-pressing mechanism disposed on a side of the down-pressing mechanism, where the side-pressing mechanism and the down-pressing mechanism are respectively configured to press different sides of the product.

An embodiment of a third aspect of this application provides a battery production device including the pressurizing apparatus according to the second aspect.

The above description is only an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Those of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 is an exploded view of a battery according to some embodiments of this application;
FIG. 2 is a front view of a down-pressing mechanism according to some embodiments of this application;
FIG. 3 is a top view of the down-pressing mechanism shown in FIG. 2;
FIG. 4 is a partially enlarged view of portion A in the down-pressing mechanism shown in FIG. 2;
FIG. 5 is a schematic structural diagram of a screw rod according to some embodiments of this application;
FIG. 6 is a three-dimensional schematic diagram of a mounting seat according to some embodiments of this application;
FIG. 7 is a three-dimensional schematic diagram of a mounting seat and a down-pressing drive assembly according to some embodiments of this application;
FIG. 8 is a three-dimensional schematic diagram of a down-pressing member according to some embodiments of this application; and
FIG. 9 is a three-dimensional schematic diagram of a pressurizing apparatus according to some embodiments of this application.

Reference signs in specific embodiments are as follows:
1000. pressurizing apparatus; 100. down-pressing mechanism; 200. bottom plate; 300. side-pressing mechanism;
10. pitch adjustment unit; 11. base plate; 12. pitch adjustment member; 13. pitch adjustment drive assembly; 131. screw rod; 1311. first segment; 1312. second segment; 1313. threaded portion; 1313a. first threaded portion; 1313b. second threaded portion; 132. rotation drive member;
20. down-pressing member; 21. mounting member; 211. mounting hole; 22. press-holding member; 23. elastic member;
30. mounting seat; 31. slide rail;
40. down-pressing drive assembly; 41. down-pressing drive member; 42. connecting member;
500. battery; 510. box; 511. first portion; 512. second portion; 520. battery module; and 521. battery cell.

### DESCRIPTION OF EMBODIMENTS

Embodiments of the technical solutions of this application will be described in detail below with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein have the same meaning as commonly understood by those skilled in the technical field of this application; the terms used herein are only for the purpose of describing specific embodiments and are not intended to limit this application; the terms "include", "comprise", "have", and any variations thereof in the specification, claims, and the above description of the accompanying drawings of this application are intended to cover non-exclusive inclusion.

In the description of the embodiments of this application, technical terms such as "first" and "second" are used only to distinguish different objects and should not be understood as indicating or implying relative importance or implicitly indicating the number, specific order, or primary-secondary relationship of the technical features indicated. In the description of the embodiments of this application, "multiple" means two or more, unless otherwise explicitly and specifically defined.

Reference to "embodiment" herein means that a particular feature, structure, or characteristic described in connection with the embodiment may be included in at least one embodiment of this application. The word "embodiment" appearing in various places in the specification does not necessarily refer to the same embodiment or an independent or alternative embodiment that is exclusive of other embodiments. Those skilled in the art explicitly and implicitly understand that the embodiments described herein can be combined with other embodiments.

In the description of the embodiments of this application, the term "and/or" merely describes an association relationship between associated objects, indicating that three relationships may be present. For example, A and/or B may indicate the following three cases: presence of only A; presence of both A and B; and presence of only B. In addition, the character "/" in this specification generally indicates an "or" relationship between the contextually associated objects.

In the description of the embodiments of this application, the term "multiple" refers to two or more (including two), similarly, "multiple groups" refers to two or more groups (including two groups), and "multiple pieces" refers to two or more pieces (including two pieces).

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of these embodiments of this application rather than indicating or implying that the means or components mentioned must have specific orientations or must be constructed or manipulated according to specific orientations, and therefore shall not be construed as any limitations on the embodiments of this application.

In the description of the embodiments of this application, unless otherwise explicitly specified and limited, technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Those of ordinary skill in the art can understand specific meanings of these terms in the embodiments of this application as suitable to specific situations.

In the battery manufacturing process, battery cells need to undergo static heating, during which the batteries must remain stationary without shifting or moving. Currently, a down-pressing mechanism is typically configured to press the tops of the battery cells. The down-pressing mechanism includes multiple pressing members capable of pressing a row of battery cells. However, traditional down-pressing mechanisms are typically only applicable to battery cells of one specification, resulting in poor compatibility.

Research has found that spacings between pressing members in traditional down-pressing mechanisms are fixed, so the traditional down-pressing mechanisms are only applicable to battery cells with the same thicknesses. For battery cells of different specifications, corresponding down-pressing mechanisms are required to be replaced, which leads to low operational efficiency and high production costs.

In view of this, this application provides a down-pressing mechanism, a pressurizing apparatus, and a battery production device. The down-pressing mechanism includes a pitch adjustment unit and multiple down-pressing members. The pitch adjustment unit includes a base plate and multiple pitch adjustment members arranged sequentially on the base plate along a first direction, where at least one pitch adjustment member can move along the first direction, each down-pressing member is connected to a corresponding pitch adjustment member, and the down-pressing members are configured to press a product. Since at least one pitch adjustment member can move along the first direction, the down-pressing member connected to the pitch adjustment member can also move along the first direction to adjust spacings between adjacent down-pressing members. Therefore, the down-pressing mechanism can adjust the spacings between the down-pressing members to adapt to products of different specifications, avoiding the issues of low efficiency and increased costs caused by the need to replace the down-pressing mechanism during production line changeovers.

The down-pressing mechanism provided by the embodiments of this application is configured to press battery cells. The down-pressing mechanism disclosed in the embodiments of this application can be used in the static heating process of the battery cells and other processes requiring the pressing of the battery cells.

Batteries can be used in various electric apparatuses. The electric apparatuses may be but are not limited to mobile phones, tablets, laptops, electric toys, electric tools, electric bicycles, electric vehicles, ships, spacecraft, and the like. Electric toys may include fixed or mobile electric toys, such as game consoles, electric toy cars, electric toy ships, electric toy airplanes, and spacecraft may include airplanes, rockets, space shuttles, spaceships, and the like. Taking an electric apparatus as a vehicle as an example, the battery can serve as an operating power source of the vehicle or a driving power source of the vehicle, replacing or partially replacing fuel or natural gas to provide driving power for the vehicle.

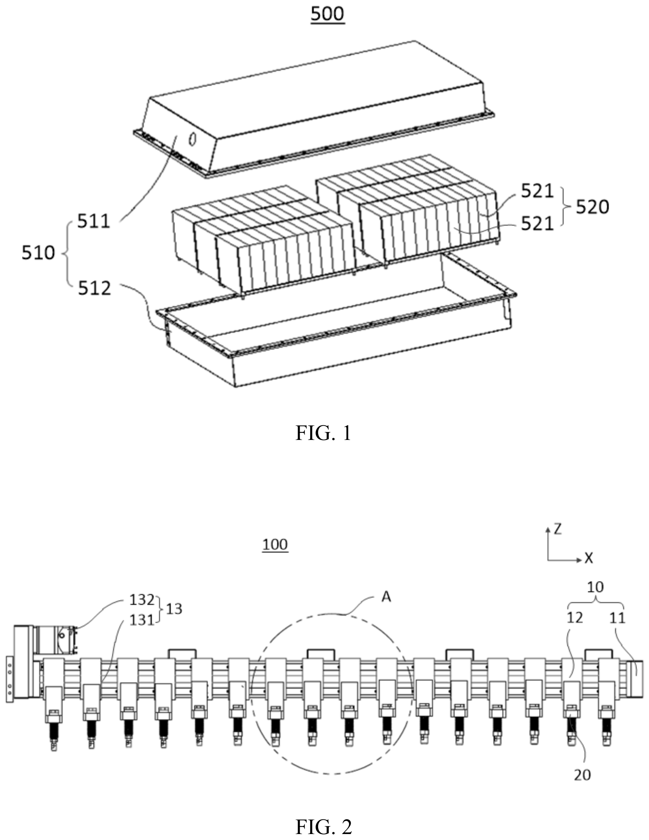

Referring to FIG. 1, FIG. 1 is a three-dimensional exploded view of a battery according to some embodiments of this application. The battery 500 includes a box 510 and a battery cell 521, where the battery cells 521 are accommodated within the box 510. The box 510 is configured to provide an accommodation space for the battery cells 521, and the box 510 may adopt various structures. In some embodiments, the box 510 may include a first portion 511 and a second portion 512, where the first portion 511 and the second portion 512 fit each other, and the first portion 511 and the second portion 512 together define the accommodation space for accommodating the battery cells 521. The second portion 512 may be a hollow structure with an opening at one end, and the first portion 511 may be a plate-like structure. The first portion 511 covers the opening side of the second portion 512, so that the first portion 511 and the second portion 512 together define the accommodation space. Alternatively, the first portion 511 and the second portion 512 may each be a hollow structure with an opening on one side, and the opening side of the first portion 511 is engaged with the opening side of the second portion 512. Certainly, the box 510 formed by the first portion 511 and the second portion 512 may have various shapes, such as a cylinder and a cuboid.

In the battery 500, there may be multiple battery cells 521. The multiple battery cells 521 may be connected in series, parallel, or series-parallel, where being connected in series-parallel means a combination of series and parallel connections of the multiple battery cells 521. The multiple battery cells 521 may be directly connected in series, parallel, or series-parallel, and then an entirety formed by the multiple battery cells 521 is accommodated in the box 510. Certainly, the battery 500 may be formed by multiple battery cells 521 being connected in series, parallel, or series-parallel first to form a battery module 520 and then multiple battery modules 520 being connected in series, parallel, or series-parallel to form an entirety which is accommodated in the box 510. The battery 500 may further include other structures. For example, the battery 500 may further include a busbar configured to implement electrical connection between the multiple battery cells 521.

Each battery cell 521 may be a secondary battery or a primary battery or may be a lithium-sulfur battery, a sodium-ion battery, or a magnesium-ion battery, but is not limited thereto. The battery cell 521 may be cylindrical, flat, cuboid, or of other shapes.

The battery cell 521 refers to the smallest unit constituting the battery. The battery cell 521 includes a housing, an electrode assembly, and an electrolyte, where both the electrode assembly and the electrolyte are accommodated within the housing. The housing may include a housing body with an opening and an end cover, where the end cover is configured to cover the opening of the housing body to isolate the internal environment of the battery cell from the external environment. The end cover may be provided with functional components such as electrode terminals. The end cover may be further provided with a pressure relief mechanism for releasing internal pressure when the internal pressure or temperature of the battery cell 521 reaches a threshold. The housing may have various shapes and sizes, such as a cuboid shape, a cylindrical shape, and a hexagonal prism shape. The material of the housing may be various, such as but not limited to metals like copper, iron, aluminum, stainless steel, and aluminum alloy. The electrode assembly is a component in the battery cell 521 where electrochemical reactions occur. The housing may include one or more electrode assemblies.

An embodiment of a first aspect of this application provides a down-pressing mechanism, where the down-pressing mechanism is configured to press a product. In this embodiment of this application, the product being a battery cell is used as an example for illustration. Multiple battery cells are arranged side by side, and the down-pressing mechanism can simultaneously press multiple battery cells. It can be understood that the down-pressing mechanism can also be configured to press other products.

Referring to FIG. 2 to FIG. 4, the down-pressing mechanism 100 includes a pitch adjustment unit 10 and multiple down-pressing members 20. The pitch adjustment unit 10 includes a base plate 11 and multiple pitch adjustment members 12 arranged sequentially on the base plate 11 along a first direction X, where at least one pitch adjustment member 12 is capable of moving along the first direction. Each down-pressing member 20 is connected to a corresponding pitch adjustment member 12, and the down-pressing members 20 are configured to press a product.

The base plate 11 provides a fixed foundation for the pitch adjustment members 12 and the down-pressing members 20. The base plate 11 is a rigid structure and may be made of any material, such as metal and plastic, as long as its strength can be ensured. The shape of the base plate 11 is not overly limited here, as long as a mounting position can be provided for the pitch adjustment members 12, for example, a long strip plate, an L-shaped long strip plate, or a hollow cylindrical structure.

The pitch adjustment members 12 are rigid structures, and multiple pitch adjustment members 12 are arranged sequentially on the base plate 11 along the first direction X, where the first direction X may be a length direction of the base plate 11. At least one pitch adjustment member 12 can move along the first direction to change spacings between the pitch adjustment members 12.

Optionally, the spacings between every two pitch adjustment members 12 change synchronously and remain equal, so that the multiple down-pressing members 20 can press multiple products of a same specification. For example, multiple pitch adjustment members 12 can all move along the first direction to synchronously change distances between every two adjacent pitch adjustment members 12. Alternatively, a pitch adjustment member 12 located at the outermost side or a pitch adjustment member 12 located in the middle remains fixed on the base plate 11, and the remaining pitch adjustment members 12 can all move along the first direction, so that distances between every two adjacent pitch adjustment members 12 can also be synchronously changed.

The down-pressing members 20 are connected to the pitch adjustment members 12, and the down-pressing members 20 can move along the first direction X with the pitch adjustment members 12, thereby adjusting the spacings between the down-pressing members 20. The down-pressing members 20 may be rigid structures or structures with a certain elasticity, and their shapes and sizes are not elaborated here, as long as they can abut against and press the battery cells. Optionally, the down-pressing members 20 are configured to press poles at the tops of the battery cells.

During use, each down-pressing member 20 is connected to a pitch adjustment member 12. When the spacings between the down-pressing members 20 need to be adjusted, at least one pitch adjustment member 12 is moved along the first direction on the base plate 11, thereby changing a spacing between the moved pitch adjustment member 12 and a down-pressing member 20 adjacent thereto. Since the down-pressing members 20 can move with the pitch adjustment members 12, the spacings between the down-pressing members 20 are also adjusted. Taking products as battery cells as an example, battery cells of different specifications may have different thicknesses. By adjusting the spacing between the down-pressing members 20, the down-pressing mechanism 100 can adapt to products of new specifications, avoiding the issues of low efficiency and increased costs caused by the need to replace the down-pressing mechanism 100 during production line changeovers.

The down-pressing mechanism 100 according to an embodiment of this application includes a pitch adjustment assembly and multiple down-pressing members 20. The pitch adjustment assembly includes a base plate 11 and multiple pitch adjustment members 12 arranged sequentially on the base plate 11 along a first direction. Since at least one pitch adjustment member 12 can move along the first direction, a down-pressing member 20 connected to the pitch adjustment member 12 can also move along the first direction to adjust spacings between adjacent down-pressing members 20. Therefore, the down-pressing mechanism 100 can adjust the spacings between the down-pressing members 20 to adapt to products of different specifications, improving the compatibility of the down-pressing mechanism 100 and avoiding the issues of low efficiency and increased costs caused by the need to replace the down-pressing mechanism 100 during production line changeovers.

In some embodiments, the pitch adjustment unit 10 further includes a pitch adjustment drive assembly 13 disposed on the base plate 11. At least one pitch adjustment member 12 is slidably connected to the base plate 11. The pitch adjustment drive assembly 13 is configured to drive at least one pitch adjustment member 12 to slide along the first direction X.

The pitch adjustment member 12 is slidably connected to the base plate 11. This can ensure that the pitch adjustment member 12 slides along the first direction without deviation during movement. For example, the base plate 11 is provided with a guiding structure such as a guide rail or a slide groove, and the pitch adjustment member 12 slidably cooperates with the guiding structure.

The pitch adjustment drive assembly 13 is disposed on the base plate 11 and connected to the pitch adjustment member 12, and the pitch adjustment drive assembly 13 is configured to drive the pitch adjustment member 12 to slide along the base plate 11, thereby enabling the down-pressing mechanism 100 to automatically adjust the position of the pitch adjustment member 12 in the first direction. The pitch adjustment drive assembly 13 may be connected to at least one pitch adjustment member 12 or may be simultaneously connected to multiple pitch adjustment members 12.

With the above technical solution used, at least one pitch adjustment member 12 can slide along the base plate 11 under the drive of the pitch adjustment drive assembly 13, achieving a high degree of automation.

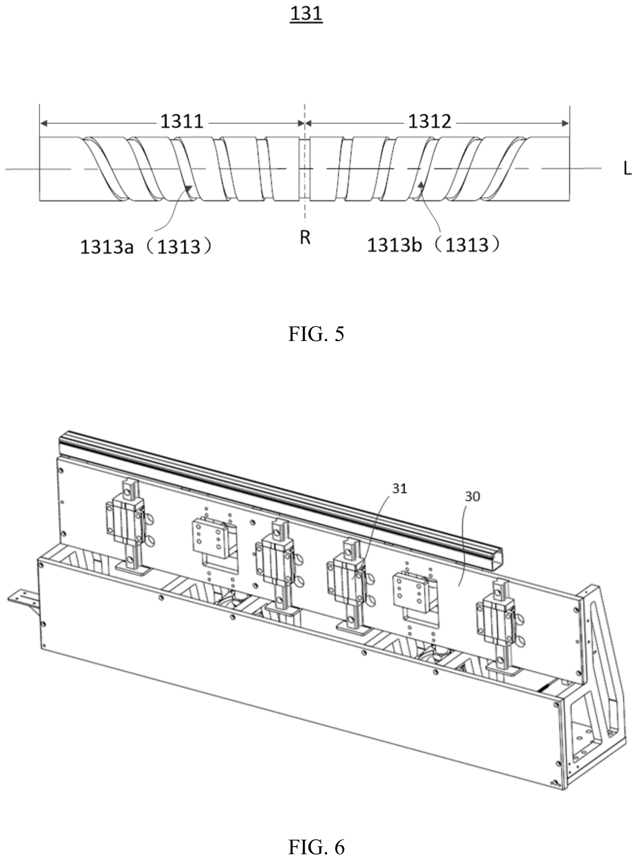

Referring to FIG. 2 and FIG. 5, in some embodiments, the pitch adjustment drive assembly 13 includes a screw rod 131 disposed on the base plate 11 and extending along the first direction X and a rotation drive member 132 connected to the screw rod 131. An outer peripheral surface of the screw rod 131 is provided with at least one threaded portion 1313. At least one pitch adjustment member 12 is drivingly connected to the threaded portion 1313. The rotation drive member 132 is configured to drive the screw rod 131 to rotate so as to drive the pitch adjustment member 12 to move along the first direction X.

An axial direction of the screw rod 131 is parallel to the length direction of the base plate 11. The screw rod 131 can rotate around its axial direction on the base plate 11. The rotation drive member 132 may include a drive motor, as long as it can drive the screw rod 131 to rotate. In this embodiment, both the rotation drive member 132 and the screw rod 131 are disposed on the base plate 11.

The outer peripheral surface of the screw rod 131 is provided with the at least one threaded portion 1313, and the at least one pitch adjustment member 12 is drivingly connected to one corresponding threaded portion 1313. For example, in some embodiments, the screw rod 131 is provided with multiple threaded portions 1313 along its axial direction, where each threaded portion 1313 is drivingly connected to a pitch adjustment member 12. The threaded portion 1313 may be a helical groove. The pitch adjustment member 12 is provided with a guiding portion that can be inserted into the helical groove, which enables the pitch adjustment member 12 to be drivingly connected to the threaded portion 1313. The threaded portion 1313 may alternatively be a threaded structure, and the pitch adjustment member 12 is provided with a threaded structure engaged with the threaded portion 1313, which also enables the pitch adjustment member 12 to be drivingly connected to the threaded portion 1313.

Since the pitch adjustment member 12 is slidably connected to the base plate 11 along the first direction, when pitch adjustment, the rotation drive member 132 drives the screw rod 131 to rotate, and the pitch adjustment member 12 drivingly connected to the threaded portion 1313 can slide along the first direction.

With the above technical solution used, the pitch adjustment drive assembly 13 drives the pitch adjustment member 12 to slide via the screw rod 131, featuring a simple structure and convenience in use.

In some embodiments, the screw rod 131 is provided with multiple threaded portions 1313, where the multiple pitch adjustment members 12 are drivingly connected to corresponding threaded portions 1313 respectively. The screw rod 131 can simultaneously drive the multiple pitch adjustment members 12 to slide along the first direction X.

If thread directions of the threaded portions 1313 are the same, the screw rod 131 can drive the multiple pitch adjustment members 12 to slide along the same direction; if the thread directions of the threaded portions 1313 are opposite, the screw rod 131 can drive two groups of pitch adjustment members 12 to slide in opposite directions.

With the above technical solution used, the pitch adjustment drive assembly 13 can simultaneously drive the multiple pitch adjustment members 12 to slide so as to synchronously adjust distances between the multiple pitch adjustment members 12, featuring high adjustment efficiency, a simple structure, and convenience in driving.

In some embodiments, the screw rod 131 includes a first segment 1311 and a second segment 1312 respectively provided on both sides of a reference plane R, where the reference plane R is a cross section of the screw rod 131. The multiple threaded portions 1313 include at least one first threaded portion 1313a disposed on the first segment 1311 and at least one second threaded portion 1313b disposed on the second segment 1312, where the first threaded portion 1313a and the second threaded portion 1313b have opposite thread directions.

The reference plane R is a virtual plane. The reference plane R may be located at the middle of the screw rod 131. For example, the reference plane R is located at a midpoint of the screw rod 131. Certainly, the reference plane may alternatively be located at another position on the screw rod 131. The reference plane R is a cross section of the screw rod 131, that is, the reference plane R is perpendicular to an axial direction of the screw rod 131.

In this embodiment, the screw rod 131 is divided into the first segment 1311 and the second segment 1312 by the reference plane R, and the threaded portions on the first segment 1311 and the second segment 1312 have the opposite thread directions. Therefore, when the screw rod 131 rotates, the pitch adjustment members 12 on the first segment 1311 and the second segment 1312 move in opposite directions. For example, when a spacing between the pitch adjustment members 12 needs to be increased, the pitch adjustment member 12 connected to the first threaded portion 1313a and the pitch adjustment member 12 connected to the second threaded portion 1313b move along a direction away from the reference plane respectively. When the spacing between the pitch adjustment members 12 needs to be decreased, the pitch adjustment members 12 connected to the first threaded portion 1313a and the pitch adjustment members 12 connected to the second threaded portion 1313b move along a direction approaching the reference plane.

With the above technical solution used, a large number of pitch adjustment members 12 can be disposed on the screw rod 131; in addition, the time required for pitch adjustment is relatively short, and movement distances of the down-pressing members 20 are relatively balanced.

In other embodiments, the pitch adjustment unit 10 may be provided with two parallel screw rods 131, and threaded portions on the two screw rods 131 have opposite thread directions, so that pitch adjustment members 12 connected to the two screw rods 131 also move in opposite directions.

In some embodiments, multiple first threaded portions 1313a are provided, and leads of the multiple first threaded portions 1313a increase along a direction away from the second segment 1312; and/or multiple second threaded portions 1313b are provided, and leads of the multiple second threaded portions 1313b increase along a direction away from the first segment 1311.

A lead of a thread refers to an axial distance for movement of any point on the thread along a same helical line in one full rotation. During thread machining, the lead is a distance for movement of a cutter along an axial direction when a workpiece rotates one full turn, that is, an axial distance between two corresponding points on a pitch diameter line of two adjacent threads of a same helical line.

Specifically, along the direction away from the second segment 1312, the leads of the multiple first threaded portions 1313a gradually increase, so that movement distances of the pitch adjustment members 12 respectively connected to the multiple first threaded portions 1313a also gradually increase. Along the direction away from the first segment 1311, the leads of the multiple second threaded portions 1313b gradually increase, so that movement distances of the pitch adjustment members 12 respectively connected to the multiple second threaded portions 1313b also gradually increase. With the above technical solution used, the multiple pitch adjustment members 12 connected to the first segment 1311 can all move along the first direction, and the multiple pitch adjustment members 12 connected to the second segment 1312 can also move along the first direction, thereby simultaneously adjusting distances between the multiple pitch adjustment members 12.

In some embodiments, the leads of the multiple first threaded portions 1313a increase in an arithmetic sequence along the direction away from the second segment 1312; and/or the leads of the multiple second threaded portions 1313b increase in an arithmetic sequence along the direction away from the first segment 1311.

Specifically, the leads between the first threaded portions 1313a form an arithmetic sequence, so that the movement distances of the pitch adjustment members 12 respectively connected to the multiple first threaded portions 1313a also change in an arithmetic sequence, thereby maintaining equal spacings between the multiple pitch adjustment members 12.

The leads between the second threaded portions 1313b form an arithmetic sequence, so that the movement distances of the pitch adjustment members 12 respectively connected to the multiple second threaded portions 1313b also change in an arithmetic sequence, thereby maintaining equal spacings between the multiple pitch adjustment members 12.

With the above technical solution used, after pitch adjustment, there are still equal spacings between the multiple pitch adjustment members 12, and the multiple down-pressing members 20 can respectively press multiple battery cells of a same specification.

In some embodiments, the first threaded portion 1313a and the second threaded portion 1313b are symmetrically arranged with respect to the reference plane.

Specifically, multiple first threaded portions 1313a and multiple second threaded portions 1313b are provided, which are equal in quantity. The leads of the multiple first threaded portions 1313a form a first arithmetic sequence, the leads of the multiple second threaded portions 1313b form a second arithmetic sequence, and a common difference of the first arithmetic sequence is equal to a common difference of the second arithmetic sequence. A distance from a first threaded portion 1313a closest to the reference plane R to the reference plane is equal to a distance from a second threaded portion 1313b closest to the reference plane R to the reference plane.

With the above technical solution used, a large number of threaded portions and pitch adjustment members 12 can be provided on the screw rod 131, and the rotation of the screw rod 131 can drive the pitch adjustment members 12 on both sides to move simultaneously so as to quickly adjust the spacings between the pitch adjustment members 12 and the down-pressing members 20.

In some embodiments, one pitch adjustment member 12 is located between the first threaded portion 1313a and the second threaded portion 1313b and is fixed on the base plate 11, and the remaining pitch adjustment members 12 are slidably connected to the base plate 11 respectively.

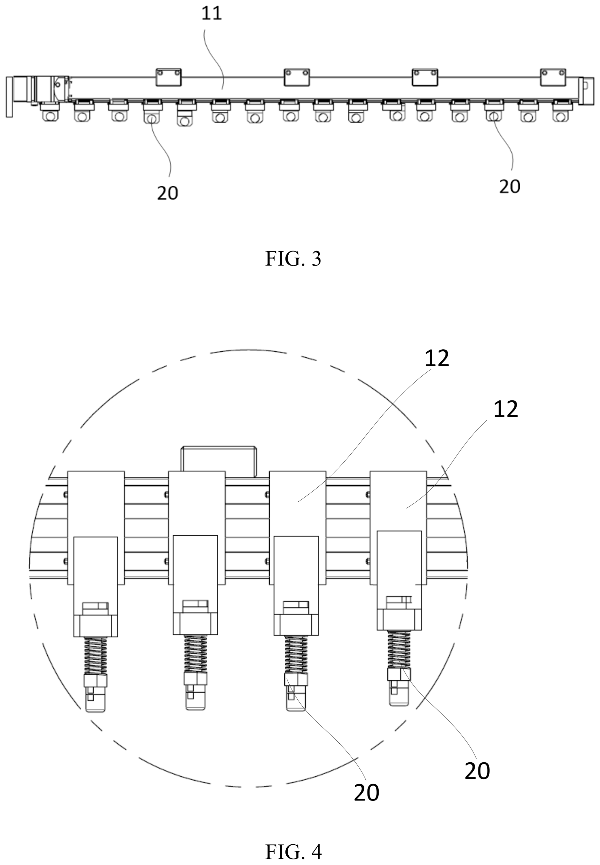

As shown in FIG. 5, the screw rod 131 is provided with an annular groove, where the annular groove is arranged around a circumference of the screw rod 131, and the annular groove is provided between the first threaded portion 1313a and the second threaded portion 1313b. The reference plane R is a cross section of the annular groove, and a distance between the annular groove and the first threaded portion 1313a closest to the reference plane is equal to a distance between the annular groove and the second threaded portion 1313b closest to the reference plane. Referring to FIG. 3 and FIG. 5, one pitch adjustment member 12 is mounted on the annular groove via a bearing, and this pitch adjustment member 12 does not move with the rotation of the screw rod 131, and the remaining pitch adjustment members 12 are respectively connected to the first threaded portion 1313a or the second threaded portion 1313b and are slidably connected to the base plate 11. It can be understood that the annular groove may be omitted as long as a centermost pitch adjustment member 12 can be fixed on the base plate 11.

During pitch adjustment, one pitch adjustment member 12 is fixed on the base plate 11, and the remaining pitch adjustment members 12 are respectively disposed on both sides of the reference plane and move in opposite directions. Movement distances of the pitch adjustment members on each side of the reference plane increase in an arithmetic sequence; and after adjustment, distances between every two adjacent pitch adjustment members 12 are equal.

With the above technical solution used, one pitch adjustment member 12 serves as a central reference member and does not need to move along the first direction. The arrangement of the central reference member can effectively utilize the space on the screw rod 131, making the structure of the pitch adjustment unit 10 compact and allowing for faster pitch adjustment of the entire pitch adjustment unit 10.

In other embodiments, all pitch adjustment members 12 are slidably connected to the base plate 11, similarly achieving synchronous pitch adjustment.

In some other embodiments, thread directions of the multiple threaded portions are the same. Along an axial direction of the screw rod 131, leads of the multiple threaded portions increase in an arithmetic sequence. When the screw rod 131 rotates, movement distances of the multiple pitch adjustment members 12 also increase in an arithmetic sequence, making spacings between the pitch adjustment members 12 equal after pitch adjustment. Spacings between the multiple down-pressing members 20 are also equal, facilitating the pressing of a row of battery cells.

Optionally, one pitch adjustment member 12 connected to an outermost end of the screw rod 131 serves as a reference member. The reference member is fixed on the base plate 11, and the remaining pitch adjustment members 12 are drivingly connected to one corresponding threaded portion.

With the above technical solution used, the pitch adjustment unit 10 can also adjust the spacings between the down-pressing members 20, with relatively high pitch adjustment precision.

In some embodiments, the threaded portion is a helical groove extending around an axial thread of the screw rod 131. One side of the pitch adjustment member 12 is inserted into a corresponding helical groove, and the other side of the pitch adjustment member 12 is connected to the down-pressing member 20.

The pitch adjustment member 12 may be slider-shaped. A side of the pitch adjustment member 12 facing the screw rod 131 is inserted into a corresponding helical groove. For example, the side of the pitch adjustment member 12 facing the screw rod 131 is provided with a ball. The ball is slidably accommodated in the helical groove. In addition, the side of the pitch adjustment member 12 facing the screw rod 131 is also slidably connected to the guiding structure on the base plate 11. Optionally, the ball is disposed at the middle of the pitch adjustment member 12, and both sides of the pitch adjustment member 12 along a width direction are respectively slidably connected to the guide rails on the base plate 11.

A side of the pitch adjustment member 12 facing away from the screw rod 131 may be connected to the down-pressing member 20 via a fastener such as a screw. Certainly, the pitch adjustment member 12 may alternatively be connected to the down-pressing member 20 by welding or other manners.

With the above technical solution used, the pitch adjustment member 12 can slide along the base plate 11 with the rotation of the screw rod 131. The pitch adjustment member 12 has a stable movement process, is less likely to shake, and has relatively high movement precision.

Referring to FIG. 2, FIG. 6, and FIG. 7, in some embodiments, the down-pressing mechanism 100 further includes a mounting seat 30 and a down-pressing drive assembly 40. The base plate 11 is slidably connected to the mounting seat 30. The down-pressing drive assembly 40 is disposed on the mounting seat 30, and the down-pressing drive assembly 40 is configured to drive the base plate 11 to slide on the mounting seat 30, so that the down-pressing members 20 press against the product.

The base plate 11 is slidably connected to the mounting seat 30. A sliding direction of the base plate 11 is a third direction Z, the third direction Z is perpendicular to the first direction X, and the third direction Z may be a vertical direction. The base plate 11 is a fixed foundation for the pitch adjustment members 12 and the down-pressing members 20. When the base plate 11 slides downward on the mounting seat 30, the pitch adjustment members 12 and the down-pressing members 20 also slide downward along the third direction Z, causing the down-pressing members 20 to press against the product, thereby achieving pressing and leveling of the product.

There are various ways for the base plate 11 to be slidably connected to the mounting seat 30. For example, the mounting seat 30 is provided with a slide rail extending along the third direction Z, and the base plate 11 is slidably connected to the slide rails via a slider. Since a length of the base plate 11 along the first direction X is relatively long, optionally, the mounting seat 30 is provided with multiple slide rails. The multiple slide rails are spaced apart along the first direction X. The base plate 11 is simultaneously slidably connected to the multiple slide rails.

The down-pressing drive assembly 40 is configured to drive the base plate 11 to slide, and the down-pressing drive assembly 40 may include a cylinder, a ball screw structure, and the like.

With the above technical solution used, the down-pressing drive assembly 40 can drive the pitch adjustment unit 10 and the multiple down-pressing members 20 to move up and down as a whole, achieving the down-pressing process on the product.

In other embodiments, the pitch adjustment unit 10 and the multiple down-pressing members 20 may alternatively be disposed on the mounting seat 30, achieving shaping of the product by raising the product to press against lower parts of the down-pressing members 20. Alternatively, the base plate 11 is provided with a down-pressing drive structure, where the down-pressing drive structure individually drives each down-pressing member 20 to descend or simultaneously drives multiple down-pressing members 20 to descend.

In some embodiments, the down-pressing drive assembly 40 includes a down-pressing drive member 41 and a connecting member 42 connected to the down-pressing drive member 41. The down-pressing drive member 41 is disposed on a side of the mounting seat 30 away from the down-pressing member 20 and the pitch adjustment unit 10. The connecting member 42 passes through the mounting seat 30 and is connected to the base plate 11.

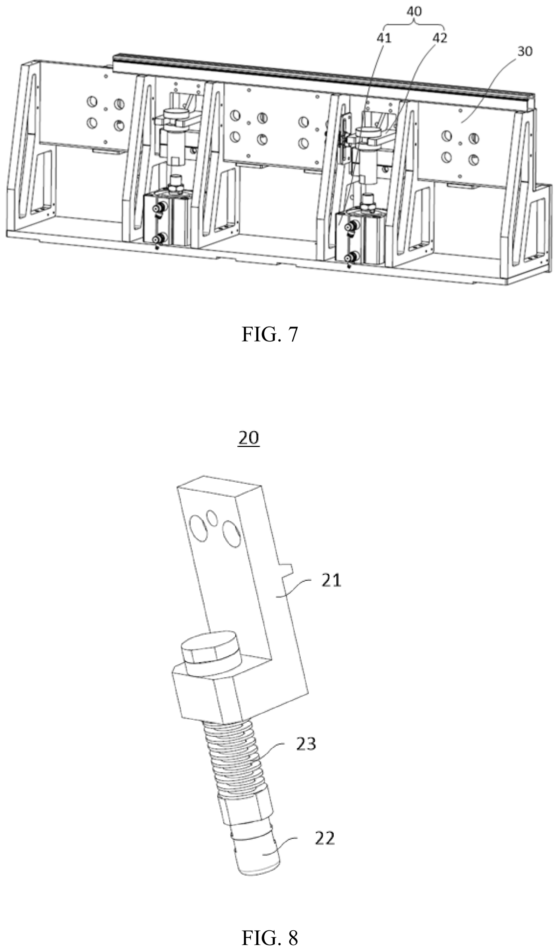

As shown in FIG. 7, the down-pressing drive member 41 may include a cylinder. The down-pressing drive member 41 is disposed on a back side of the mounting seat 30 to avoid obstructing the movement of the down-pressing member 20. The connecting member 42 is inserted into a through-hole in the mounting seat 30. One side of the connecting member 42 is connected to a driving end of the down-pressing drive member 41, and the other side is connected to the base plate 11. Since the length of the base plate 11 is relatively long, two down-pressing drive members 41 may be provided and spaced along a length direction of the base plate 11.

With the above technical solution used, the down-pressing drive member 41 can drive the base plate 11 to descend without obstructing a down-pressing path of the down-pressing member 20.

A structure and a mounting position of the down-pressing drive assembly 40 may alternatively adopt other solutions. For example, the down-pressing drive assembly 40 is disposed on a side of the base plate 11.

Referring to FIG. 3, FIG. 4, and FIG. 8, in some embodiments, the down-pressing member 20 includes a mounting member 21 fixedly connected to the pitch adjustment member 12 and a press-holding member 22 connected to the mounting member 21.

The mounting member 21 may be an L-shaped plate, with one end connected to the pitch adjustment member 12 and the other end used to mount the press-holding member 22. The end of the press-holding member 22 used to abut against the product may be cylindrical or of other shapes. When the product is a battery cell, the end of the press-holding member 22 may be slightly larger than a pole.

With the above technical solution used, the shape of the press-holding member 22 can be flexibly designed according to a product to be pressed.

In some embodiments, the mounting member 21 is provided with a mounting hole. The press-holding member 22 is movably inserted into the mounting hole. An elastic member 23 is sleeved on the press-holding member 22. Both ends of the elastic member 23 respectively press against the mounting member 21 and the press-holding member 22. Thus, the elastic member 23 can provide a certain buffering effect for a down-pressing action of the press-holding member 22, ensuring that the press-holding member 22 abuts against the product while preventing the press-holding member 22 from causing damage to the product due to excessive pressure.

Referring to FIG. 1 to FIG. 8, in some embodiments, the down-pressing mechanism 100 includes a pitch adjustment unit 10 and multiple down-pressing members 20. The pitch adjustment unit 10 includes a base plate 11, multiple pitch adjustment members 12, and a pitch adjustment drive assembly 13. The pitch adjustment drive assembly 13 includes a screw rod 131 and a rotation drive member 132 configured to drive the screw rod 131 to rotate. The screw rod 131 is provided with multiple threaded portions. The multiple pitch adjustment members 12 are drivingly connected to corresponding threaded portions respectively, and the pitch adjustment members 12 can slide along the base plate 11 when the screw rod 131 rotates to adjust distances between the pitch adjustment members 12, thereby adjusting distances between the multiple down-pressing members 20. Therefore, the down-pressing mechanism 100 can automatically adjust the distances between the multiple down-pressing members 20 to adapt to battery cells of various specifications, with good compatibility.

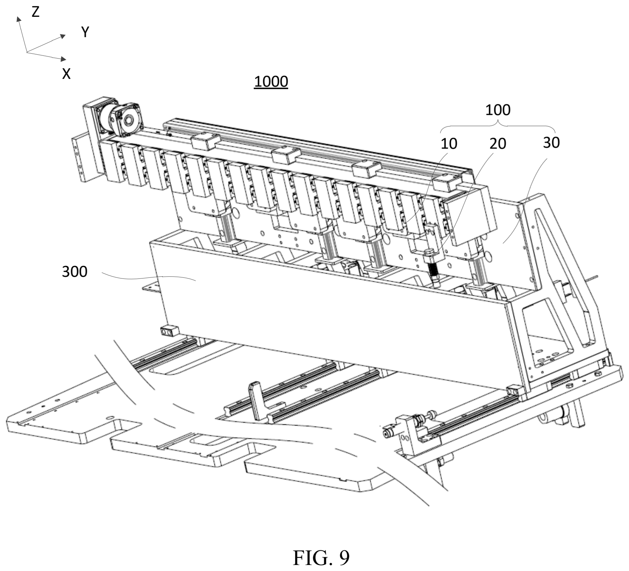

Referring to FIG. 9, an embodiment of a second aspect of this application provides a pressurizing apparatus 1000 including the down-pressing mechanism 100 according to the first aspect.

The pressurizing apparatus 1000 can be used in the pressurizing and standing processes or other production processes of batteries. Since the down-pressing mechanism 100 can be compatible with battery cells of different specifications, the pressurizing apparatus 1000 is also applicable to battery cells of various specifications, eliminating the need to disassemble and replace the down-pressing mechanism 100 during changeover of the battery cells, allowing for a simple operation, improving the production efficiency of the pressurizing process, and reducing production costs.

In some embodiments, the pressurizing apparatus 1000 further includes a bottom plate 200, where the down-pressing mechanism 100 is slidably connected to the bottom plate 200 along a second direction Y, and the second direction Y is perpendicular to the first direction X.

The down-pressing mechanism 100 can slide along the second direction, helping the down-pressing mechanism 100 to approach or move away from the battery cells, achieving a high degree of automation.

In some embodiments, the pressurizing apparatus 1000 further includes a side-pressing mechanism 300 disposed on a side of the down-pressing mechanism 100. The side-pressing mechanism 300 and the down-pressing mechanism 100 are respectively configured to press different sides of the product.

The side-pressing mechanism 300 is configured to press a side of the product along the second direction Y, and the down-pressing mechanism 100 is configured to press a side of the product along the third direction Z. Therefore, the pressurizing apparatus 1000 can press and shape products such as battery cells.

Optionally, both the side-pressing mechanism 300 and the down-pressing mechanism 100 are disposed on the mounting seat 30, and the mounting seat 30 is slidably connected to the bottom plate 200 along the second direction Y. Therefore, the side-pressing mechanism 300 and the down-pressing mechanism 100 can move synchronously to simultaneously approach the product. Optionally, the side-pressing mechanism 300 can also heat the battery cells to cure an adhesive.

Optionally, two groups of side-pressing mechanisms 300 and two groups of down-pressing mechanisms 100 are provided and respectively disposed on both sides of the bottom plate 200, further improving the pressurizing efficiency.

An embodiment of a third aspect of this application provides a battery production device including the pressurizing apparatus according to the second aspect.

The battery production device is configured to produce batteries, and the battery production device may further include apparatuses for various battery production processes, such as electrode sheet production apparatuses and adhesive application apparatuses.

In conclusion, it should be noted that the above embodiments are merely intended for describing the technical solutions of this application but not for limiting this application. Although this application is described in detail with reference to the foregoing embodiments, those of ordinary skill in the art should understand that they may still make modifications to the technical solutions described in the foregoing embodiments or make equivalent replacements to some or all technical features thereof without departing from the scope of the technical solutions of the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed herein but includes all technical solutions falling within the scope of the claims.

## Claims

1. A down-pressing mechanism, **characterized by** comprising:
a pitch adjustment unit comprising a base plate and multiple pitch adjustment members arranged sequentially on the base plate along a first direction, wherein at least one pitch adjustment member is capable of moving along the first direction; and
multiple down-pressing members, wherein each down-pressing member is connected to a corresponding pitch adjustment member, and the down-pressing members are configured to press a product.

2. The down-pressing mechanism according to claim 1, wherein the pitch adjustment unit further comprises a pitch adjustment drive assembly disposed on the base plate, at least one pitch adjustment member is slidably connected to the base plate, and the pitch adjustment drive assembly is configured to drive at least one pitch adjustment member to slide along the first direction.

3. The down-pressing mechanism according to claim 2, wherein the pitch adjustment drive assembly comprises a screw rod disposed on the base plate and extending along the first direction and a rotation drive member connected to the screw rod; and
an outer peripheral surface of the screw rod is provided with at least one threaded portion, at least one pitch adjustment member is drivingly connected to the threaded portion, and the rotation drive member is configured to drive the screw rod to rotate so as to drive the pitch adjustment member to slide along the first direction.

4. The down-pressing mechanism according to claim 3, wherein the screw rod is provided with multiple threaded portions, wherein the multiple pitch adjustment members are drivingly connected to corresponding threaded portions respectively, and the screw rod is capable of simultaneously driving the multiple pitch adjustment members to slide along the first direction.

5. The down-pressing mechanism according to claim 4, wherein the screw rod comprises a first segment and a second segment respectively provided on opposite sides of a reference plane, wherein the reference plane is a cross section of the screw rod; and
the multiple threaded portions comprise at least one first threaded portion disposed on the first segment and at least one second threaded portion disposed on the second segment, wherein the first threaded portion and the second threaded portion have opposite thread directions.

6. The down-pressing mechanism according to claim 5, wherein multiple first threaded portions are provided, and leads of the multiple first threaded portions increase along a direction away from the second segment; and/or
multiple second threaded portions are provided, and leads of the multiple second threaded portions increase along a direction away from the first segment.

7. The down-pressing mechanism according to claim 6, wherein
the leads of the multiple first threaded portions increase in an arithmetic sequence along the direction away from the second segment; and/or
the leads of the multiple second threaded portions increase in an arithmetic sequence along the direction away from the first segment.

8. The down-pressing mechanism according to any one of claims 5 to 7, wherein the first threaded portion and the second threaded portion are symmetrically arranged with respect to the reference plane.

9. The down-pressing mechanism according to claim 8, wherein one pitch adjustment member is located between the first threaded portion and the second threaded portion and is mounted on the screw rod via a bearing, and the remaining pitch adjustment members are slidably connected to the screw rod respectively.

10. The down-pressing mechanism according to claim 4, wherein thread directions of the multiple threaded portions are the same; and along an axial direction of the screw rod, leads of the multiple threaded portions increase in an arithmetic sequence.

11. The down-pressing mechanism according to any one of claims 3 to 10, wherein the threaded portion is a helical groove extending in a helical pattern around an axial direction of the screw rod, one side of the pitch adjustment member is inserted into a corresponding helical groove, and the other side of the pitch adjustment member is connected to the down-pressing member.

12. The down-pressing mechanism according to any one of claims 1 to 11, wherein the down-pressing mechanism further comprises a mounting seat and a down-pressing drive assembly, wherein the base plate is slidably connected to the mounting seat; the down-pressing drive assembly is disposed on the mounting seat; and the down-pressing drive assembly is configured to drive the base plate to slide on the mounting seat, so that the down-pressing members press against the product.

13. The down-pressing mechanism according to claim 12, wherein the down-pressing drive assembly comprises a down-pressing drive member and a connecting member connected to the down-pressing drive member, wherein the down-pressing drive member is disposed on a side of the mounting seat facing away from the down-pressing member and the pitch adjustment unit, and the connecting member passes through the mounting seat and is connected to the base plate.

14. The down-pressing mechanism according to any one of claims 1 to 13, wherein the down-pressing member comprises a mounting member fixedly connected to the pitch adjustment member and a press-holding member connected to the mounting member.

15. The down-pressing mechanism according to claim 14, wherein the mounting member is provided with a mounting hole, wherein the press-holding member is movably inserted into the mounting hole; an elastic member is sleeved on the press-holding member; and both ends of the elastic member respectively press against the mounting member and the press-holding member.

16. A pressurizing apparatus, comprising the down-pressing mechanism according to any one of claims 1 to 15.

17. The pressurizing apparatus according to claim 16, wherein the pressurizing apparatus further comprises a bottom plate, wherein the down-pressing mechanism is slidably connected to the bottom plate along a second direction, and the second direction is perpendicular to the first direction.

18. The pressurizing apparatus according to claim 17, wherein the pressurizing apparatus further comprises a side-pressing mechanism disposed on a side of the down-pressing mechanism, wherein the side-pressing mechanism and the down-pressing mechanism are respectively configured to press different sides of the product.

19. A battery production device, comprising the pressurizing apparatus according to any one of claims 16 to 18.
